# EUROPEAN PATENT APPLICATION

(11) **EP 4 053 184 A1**
(43) Date of publication of application: **07.09.2022**
(21) Application number: 21160165.3
(22) Date of filing: 02.03.2021
(51) Int. Cl.: C08G 18/76, C08G 18/73, C08K 3/04, C09D 175/04, C08K 5/5425, C08K 5/5415, C08K 5/29, C08K 3/32

(54) **COATING COMPOSITION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a coating composition and use thereof, and an article comprising a coating formed from the coating composition. The coating composition comprises a polyurethane prepolymer, which comprises 60% by weight to 100% by weight of an aromatic isocyanate-based polyurethane prepolymer and 0% by weight to 40% by weight of an aliphatic and/or cycloaliphatic isocyanate-based polyurethane prepolymer, relative to the total weight of the polyurethane prepolymer; expanded graphite; ammonium polyphosphate without surface treatment; and water scavenger; wherein the isocyanate group content of the polyurethane prepolymer is of 2.5% by weight to 14% by weight, relative to the total weight of the solid constituents of the polyurethane prepolymer; the amount of the water scavenger is of 0.1% by weight to 5% by weight, relative to the total weight of the composition; the ratio of weight of the polyurethane prepolymer to weight sum of the expanded graphite and the ammonium polyphosphate without surface treatment is of 1:2-2:1; and the weight ratio of the expanded graphite to the ammonium polyphosphate without surface treatment is of 1:10-4:1.

## Description

### Technical Field

The present invention relates to a coating composition and use thereof, and an article comprising a coating formed from the coating composition.

### Prior Art

New energy vehicles, especially pure electric vehicles, are actively promoted in recent years. There is a risk of internal combustion and thermal runaway at the explosion-proof valve of the positive electrode in the battery, especially the lithium battery-of the electric vehicles. Thermal runaway of the batteries in the electric vehicles often occurs. In order to improve the safety of electric vehicles, the Ministry of Industry and Information Technology has established three mandatory national standards, GB18384-2020 " Electric vehicles safety requirements", GB38031-2020 "Electric buses safety requirements" and GB38032-2020 "Electric vehicles traction battery safety requirements", wherein higher requirements are imposed on the fire resistance and heat resistance of the battery pack of electric vehicles. For example, the newly added heat spread test in the "Electric vehicles traction battery safety requirements" requires that the battery pack of the electric vehicles does not catch fire or explode within 5 minutes after thermal runaway occurs, thereby providing sufficient escape time for the occupants.

In order to improve the fire resistance and heat resistance of the battery pack it is preferred to replace the material for battery packs with a fire retardant material, which has still a relatively limited fire retardant effect. It is also an option to rivet a layer of mica sheet inside the battery pack. However, the relative density of mica sheets is relatively high, so that it is unfavorable for the lightweight of the automotive body. It is also difficult for the layer of mica sheet to completely fit the battery pack, if the design of the battery pack has certain irregular structure.

It is a very suitable and economical choice to apply a fire retardant coating on the inside or outside of the battery packs. The fire retardant coating system may be a solventborne system, an waterborne system, or a solvent-free system. The solventborne system has excellent adhesion to the battery pack substrate. However, the conventional solventborne system contains a large amount of solvents, especially solvents such as esters and ketones, which cause serious corrosion to the plastic substrate of battery packs. A fire retardant coating of the waterborne system is an environmentally friendly solution, while there is a problem of slow volatilization of water for the waterborne system. Especially a thick layer of an waterborne coating system usually requires drying equipment. The automotive battery pack has a large volume, and there is usually no pre-arranged drying tunnel in the production and installation workshop. Thus, it takes a lot of time to dry an waterborne system, which greatly affects the production efficiency of the automotive battery packs. The solvent-free system does not corrode the battery pack substrate, and has no problem of slow volatilization of water in the system, thus is a better choice than the solventborne system and the waterborne system. However, a two-component solvent-free system requires special equipment for on-site mixing, and has to be used within a certain time upon mixing, which is inconvenient for operation.

Therefore, it is desired to develop a new fire resistant and heat resistant coating composition, which can be easily applied on the battery pack of electric vehicles and form a coating with good fire resistance and high heat resistance, so that the battery pack does not catch fire or explode within 5 minutes or more when the battery in the battery pack catches fire or explodes, thereby providing escape time for the occupants in the vehicles.

### Summary of the invention

The object of the present invention is to provide a coating composition and use thereof, a coating method of the coating composition and an article comprising a coating formed from the coating composition.

The coating composition according to the present invention comprises:
a. a polyurethane prepolymer, which comprises 60% by weight to 100% by weight of an aromatic isocyanate-based polyurethane prepolymer and 0% by weight to 40% by weight of an aliphatic and/or alicyclic isocyanate-based polyurethane prepolymer, relative to the total weight of the polyurethane prepolymer;
b. expanded graphite;
c. ammonium polyphosphate without surface treatment;
d. water scavenger; and
e. optionally a solvent in an amount of no more than 35% by weight, relative to the total weight of the composition.

The isocyanate group content of the polyurethane prepolymer of component a) is of 2.5% by weight to 14% by weight, relative to the total weight of the solid constituents of the polyurethane prepolymer of component a); the amount of the water scavenger of component d) is of 0.1% by weight to 5% by weight, relative to the total weight of the composition; and the ratio of weight of the polyurethane prepolymer of component a) to weight sum of the expanded graphite of component b) and the ammonium polyphosphate without surface treatment of component c) is of 1:2-2:1, and the weight ratio of the expanded graphite of component b) to the ammonium polyphosphate without surface treatment of component c) is of 1:10-4:1.

According to one aspect of the present invention, use of the coating composition of the present invention for slowing down or preventing the spread of flame or heat generated by an object is provided.

According to another aspect of the present invention, use of the coating composition of the present invention for slowing down or preventing the spread of heat generated by a flammable object is provided.

According to yet another aspect of the present invention, a coating method comprising applying the coating composition according to the present invention to the surface of an object and/or a storage pack of the object and then curing is provided.

According to yet another aspect of the present invention, an article comprising an object and a coating formed by applying the coating composition according to the present invention to the object and/or the storage box of the object and then curing is provided.

According to still another aspect of the present invention, a method for preparing the coating composition according to the present invention, comprising mixing the polyurethane prepolymer of component a), the expanded graphite of component b), the ammonium polyphosphate without surface treatment of component c), the water scavenger of component d) and optionally the solvent of component e) in any desired manner is provided .

The coating composition of the present invention is simple and safe to use.

The coating composition of the present invention, especially the one-component solvent-free coating composition, is an environmentally friendly solvent-free coating composition and does not pollute the environment.

The coating composition of the present invention is a fire resistant and high heat resistant coating composition, and the formed coating has good fire resistance and heat resistance. When a flammable object coated with the coating composition of the present invention catches fire and explodes, the storage pack of the flammable object can withstand high temperature for more than 5 minutes without being burnt through.

The coating composition of the present invention is applied to the inside and/or outside of automotive battery packs, the battery packs can withstand high temperature for more than 5 minutes without being burnt through when the battery in the battery packs catches fire and explodes, thereby providing escape time for the occupants in the vehicles.

The coating composition of the present invention has good extrusion rate, good sag resistance, fast surface drying time and good storage stability, and is easily coated without damaging the substrate.

The coating formed from the coating composition of the present invention has good adhesion and fire retardancy, and is not easy to fall off once exposed to heat.

### Embodiments

The present invention provides a coating composition, especially a fire resistant and heat resistant coating composition, comprising a) a polyurethane prepolymer, which comprises 60% by weight to 100% by weight of an aromatic isocyanate-based polyurethane prepolymer and 0% by weight to 40% by weight of an aliphatic and/or cycloaliphatic isocyanate-based polyurethane prepolymer, relative to the total weight of the polyurethane prepolymer; b) expanded graphite; c) ammonium polyphosphate without surface treatment; d) water scavenger; and e) optionally a solvent in an amount of not more than 35% by weight, relative to the total weight of the composition; wherein the isocyanate group content of the polyurethane prepolymer of component a) is of 2.5% by weight to 14% by weight, relative to the total weight of the solid constituents of the polyurethane prepolymer of component a); the amount of the water scavenger of component d) is of 0.1% by weight to 5% by weight, relative to the total weight of the composition; the ratio of weight of the polyurethane prepolymer of component a) to weight sum of the expanded graphite of component b) and the ammonium polyphosphate without surface treatment of component c) is of 1:2-2:1, and the weight ratio of the expanded graphite of component b) to the ammonium polyphosphate without surface treatment of component c) is of 1:10-4:1. The present invention also provides a coating method and use of the coating composition, and an article comprising a coating formed from the coating composition.

The term "solvent-free" used herein means that no solvent is actively added to the coating composition, and the VOC content of the coating composition is less than 60g/L.

The term "coating composition" used herein refers to a chemical composition that can be applied to the surface of an object by a variety of processes to form a continuous solid coating with firm adhesion and certain strength.

The term "curing" used herein refers to a process from a liquid state to a cured state of a coating composition.

The term "ammonium polyphosphate without surface treatment" used herein refers to an ammonium polyphosphate without treatment using a chemical substance on the surface or an ammonium polyphosphate without physical treatment on the surface.

The term "aromatic isocyanate-based polyurethane prepolymer" used herein refers to a polyurethane prepolymer obtained by the reaction of a component comprising an aromatic isocyanate.

The term "aliphatic isocyanate-based polyurethane prepolymer" used herein refers to a polyurethane prepolymer obtained by the reaction of a component comprising an aliphatic isocyanate.

The term "cycloaliphatic isocyanate-based polyurethane prepolymer" used herein refers to a polyurethane prepolymer obtained by the reaction of a component comprising an cycloaliphatic isocyanate.

The solid constituents of the polyurethane prepolymer herein refer to the non-volatile constituents of the polyurethane prepolymer, which comprise no water or other solvents.

### Coating composition

The coating composition is preferably a one-component coating.

The weight ratio of the expandable graphite of component b) to the ammonium polyphosphate without surface treatment of component c) is preferably of 1:7-2:1, and most preferably 1:7-1:2.

The amount of the polyurethane prepolymer of component a) is preferably of 35% by weight to 60% by weight, relative to the total weight of the composition.

The sum of the amount of the expanded graphite of component b) and that of the ammonium polyphosphate without surface treatment of component c) is preferably of 39.5% by weight to 64.5% by weight, relative to the total weight of the composition.

The ratio of weight of the polyurethane prepolymer of component a) to weight sum of the expanded graphite of component b) and the ammonium polyphosphate without surface treatment of component c) is preferably of 7:13-3:2.

### Polyurethane prepolymer of component a)

The isocyanate group content of the polyurethane prepolymer is preferably 3% by weight to 11% by weight, relative to the total weight of the polyurethane prepolymer of component a).

The viscosity of the polyurethane prepolymer is preferably of 2000 mPa·s to 10000 mPa·s, which is measured with an MV-DIN rotor according to DIN EN ISO 3219: 1994-10 at 23°C and at a shear rate of 10 s⁻¹.

The isocyanate functionality of the polyurethane prepolymer is preferably of 2-3, which is measured according to GPC.

The molecular weight of the polyurethane prepolymer is preferably of 800g/mol to 4200g/mol, which is measured by gel permeation chromatography according to DIN 55672-1: 2016-03 with polystyrene as the standard and tetrahydrofuran as the eluent.

The amount of the aliphatic and/or cycloaliphatic isocyanate-based polyurethane prepolymer is preferably of not more than 35% by weight, relative to the total weight of the polyurethane prepolymer of component a).

The isocyanate group content of the aromatic isocyanate-based polyurethane prepolymer is preferably of 2.5% by weight to 14% by weight, most preferably 3.1% by weight to 10.5% by weight, relative to the total weight of the solid constituent of the aromatic isocyanate-based polyurethane prepolymer.

The aromatic isocyanate-based polyurethane prepolymer is preferably one or more of diphenylmethane diisocyanate-based polyurethane prepolymers and toluene diisocyanate-based polyurethane prepolymers.
The aliphatic and/or cycloaliphatic isocyanate-based polyurethane prepolymer is one or more of isophorone diisocyanate-based polyurethane prepolymers and hexamethylene diisocyanate-based polyurethane prepolymers.

The polyurethane prepolymer is further preferably a combination of a toluene diisocyanate-based polyurethane prepolymer and a hexamethylene diisocyanate-based polyurethane prepolymer, or a combination of a toluene diisocyanate-based polyurethane prepolymer and an isophorone diisocyanate-based polyurethane prepolymer; most preferably a combination of a toluene diisocyanate-based polyurethane prepolymer with a free monomer content of less than 0.5% by weight and a hexamethylene diisocyanate-based polyurethane prepolymer with a free monomer content of less than 0.5% by weight, or a combination of a toluene diisocyanate-based polyurethane prepolymer with a free monomer content of less than 0.5% by weight and an isophorone diisocyanate-based polyurethane prepolymer with a free monomer content of less than 2.0% by weight.

### Expandable graphite of component b)

The particle size of the expanded graphite is preferably of 10 mesh to 100 mesh, which is measured according to GB 10698-89.

The expansion rate of the expanded graphite is preferably of 200ml/g-400ml/g, which is measured according to GB 10698-89.

The expanded graphite is preferably flake graphite.

The amount of the expanded graphite is preferably of 5% by weight to 43% by weight, relative to the total weight of the composition.

### Ammonium polyphosphate without surface treatment of component c)

The phosphorus content of the ammonium polyphosphate without surface treatment is preferably of not less than 25% by weight, and most preferably 25% by weight to 40% by weight, relative to the total weight of the ammonium polyphosphate without surface treatment.

The particle size of the ammonium polyphosphate without surface treatment is preferably of 1µm-100 µm, which is measured according to the laser diffraction method.

The decomposition temperature of the ammonium polyphosphate without surface treatment is preferably above 275°C, which is measured according to GB/T 13464-92.

The polymerization degree of the ammonium polyphosphate with untreated surface is preferably above 1000, which is measured according to the nuclear magnetic resonance method.

The ammonium polyphosphate without surface treatment is preferably one or more of ammonium polyphosphates without treatment using a chemical substance on the surface and ammonium polyphosphates without physical treatment on the surface.

The amount of the ammonium polyphosphate without surface treatment is preferably of 13% by weight to 57% by weight, relative to the total weight of the composition.

### Water scavenger of component d)

The amount of the water scavenger is preferably of 0.1% by weight to 5% by weight, relative to the total weight of the composition.

The water scavenger is preferably one having one or more of the following structural formulae:

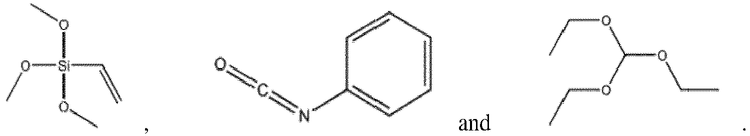

The water scavenger is most preferably one or more of vinyl trimethoxysilane, phenyl isocyanate and triethyl orthosilicate.

### Solvent of component e)

The solvent is preferably one without active hydrogen, further preferably one or more of esters, ketones and ether esters, and also preferably ether esters with a boiling point of 100°C to 180°C, most preferably one or more of propylene glycol methyl ether acetate (PMA) and propylene glycol methyl ether propionate (PMP).

The solvent in the coating composition can be added separately, or can be present in various components of the system, for example, in the polyurethane prepolymer.

The coating composition is applied according to a method known to those skilled in the art, most preferably by spraying, when it comprises the solvent of component e).

The coating composition is most preferably a one-component solvent-free coating composition, which is very suitable for applications requiring low VOC emission. The coating composition is most preferably applied by blade coating, when it is solvent-free.

### Additive

The composition may further comprise an additive.

The additive is preferably one or more of aluminosilicate fibers, titanium dioxide, fumed silica, adhesion promoters and catalysts.

The additive is added according to a method and in an amount known to those skilled in the art.

### Article

The object is preferably a flammable object, more preferably selected from batteries, train chassises, automotive chassises, doors and windows, and most preferably electric vehicle batteries.

The storage pack of the object is preferably a storage pack for flammable objects, more preferably a battery pack, still preferably an electric vehicle battery pack, and most preferably one or more of the top cover of the electric vehicle battery pack, the bottom cover of the electric vehicle battery pack, and joints of various parts of the electric vehicle battery pack.

### Examples

Unless defined otherwise, all technical and scientific terms used herein have the same meaning as commonly understood by those skilled in the art. When the definition of a term in this specification conflicts with the meanings commonly understood by those skilled in the art, the definition described herein shall apply.

Unless indicated otherwise, all numbers expressing quantities of ingredients, reaction conditions and the like used in the specification and claims are to be understood as being modified by the wording "about". Accordingly, unless indicated to the contrary, the numerical parameters set forth herein are approximations that can vary depending upon the desired properties to be obtained.

The wording "and/or" used herein refers to one or all of the mentioned elements.

The wording "include" and "comprise" used herein cover the presence of the mentioned elements alone and the presence of other unmentioned elements in addition to the mentioned elements.

All percentages in the present invention are weight percentages, unless otherwise stated.

The analysis and measurement in the present invention are performed at 23±2°C, unless otherwise stated.

### Raw materials and agents

Desmodur E 22: diphenylmethane diisocyanate-based polyurethane prepolymer with solid content of 100% by weight, isocyanate group content of 8.6±0.3% by weight (relative to the total weight of the solid constituent of the polyurethane prepolymer), isocyanate functionality of 2.0, molecular weight of 950 g/mol, and viscosity of 2800±400 mPa·s, available from Covestro Polymers (China) Co., Ltd.
Desmodur SBU Isocyanate 0620: diphenylmethane diisocyanate-based polyurethane prepolymer with solid content of 100% by weight, isocyanate group content of 10±0.5% by weight (relative to the total weight of the solid constituent of the polyurethane prepolymer), isocyanate functionality of 2.0, molecular weight of 860 g/mol, and viscosity 2700±500 mPa·s, available from Covestro Polymers (China) Co., Ltd.
Desmodur E 21: diphenylmethane diisocyanate-polyurethane prepolymer with solid content of 100% by weight, isocyanate group content of 16±0.7% by weight (relative to the total weight of the solid constituent of the polyurethane prepolymer), isocyanate functionality of 2.8, molecular weight of 720 g/mol, and viscosity 5400±1300 mPa·s, available from Covestro Polymers (China) Co., Ltd.
Desmodur E 23: diphenylmethane diisocyanate-based polyurethane prepolymer with solid content of 100% by weight, isocyanate group content of 15.4±0.4% by weight (relative to the total weight of the solid constituent of the polyurethane prepolymer), isocyanate functionality of 2.1, molecular weight of 560 g/mol, and viscosity 1800±250 mPa·s, available from Covestro Polymers (China) Co., Ltd.
Desmoseal M 280: diphenylmethane diisocyanate-based polyurethane prepolymer with solid content of 80% by weight, isocyanate group content of 1.7±0.3% by weight (relative to the total weight of the solid constituent of the polyurethane prepolymer), isocyanate functionality of 2.5, molecular weight of 5000 g/mol, and viscosity 33000±700 mPa·s, available from Covestro Polymers (China) Co., Ltd.
Desmodur E 14: toluene diisocyanate-based polyurethane prepolymer with solid content of 100% by weight, isocyanate group content of 3.3±0.2% by weight (relative to the total weight of the solid constituent of the polyurethane prepolymer), isocyanate functionality of 2.5, molecular weight of 3100 g/mol, viscosity 6800±1200 mPa·s, and free monomer content of less than 0.5% by weight, available from Covestro Polymers (China) Co., Ltd.
Desmodur E 30600: hexamethylene diisocyanate-based polyurethane prepolymer with solid content of 100% by weight, isocyanate group content of 6±0.5% by weight (relative to the total weight of the solid constituent of the polyurethane prepolymer), isocyanate functionality of 4.0, molecular weight of 2800 g/mol, viscosity 2500±500 mPa·s, and free monomer content of less than 0.5% by weight, available from Covestro Polymers (China) Co., Ltd.
Desmodur VP LS 2371: isophorone diisocyanate-based polyurethane prepolymer with solid content of 100% by weight, isocyanate group content of 3.4 to 4.0% by weight (relative to the total weight of the solid constituent of the polyurethane prepolymer), isocyanate functionality of 2.0, molecular weight of 2200 g/mol, viscosity 7300 mPa·s to 12300 mPa·s, and free monomer content of less than 2.0% by weight, available from Covestro Polymers (China) Co., Ltd.
PUREGP-95: expanded graphite with a particle size of 50-80 mesh, expansion rate of 250 ml/g to 300 ml/g, available from Weihai Yunshan Technology Co., Ltd.
EXOLIT AP 428: ammonium polyphosphate without surface treatment with phosphorus content of 31 to 32% by weight, average particle size (D50) of 20µm, decomposition temperature of >275°C, and polymerization degree of > 1000, available from Clariant.
EXOLIT AP 422: ammonium polyphosphate without surface treatment with phosphorus content of 31 to 32% by weight, average particle size (D50) of 17µm, decomposition temperature of >275°C, and polymerization degree of > 1000, available from Clariant.
EXOLIT AP 423: ammonium polyphosphate without surface treatment with phosphorus content of 31 to 32% by weight, average particle size (D50) of 8µm, decomposition temperature of >275°C, and polymerization degree of > 1000, available from Clariant.
EXOLIT AP 435: ammonium polyphosphate with surface treatment with fire retardant synergist with phosphorus content of 31 to 32% by weight, average particle size (D50) of 17µm, decomposition temperature of >275°C, and polymerization degree of >1000, available from Clariant.
EXOLIT AP 462: ammonium polyphosphate with surface treatment with fire retardant synergist with phosphorus content of 29 to 31% by weight, average particle size (D50) of 20µm, decomposition temperature of >275°C, and polymerization degree of >1000, available from Clariant.
Dynasylan VTMO: vinyl trimethoxysilane, water scavenger, available from Evonik.
Additive TI: phenyl isocyanate, water scavenger, available from Ou'enji Trade Co., Ltd.
CAB-O-SIL LM150: fumed Silica, available from Cabot.
Pentaerythritol: charring agent, available from Hubei Yihua Group.
Desmodur RFE: solventborne crosslinker, available from Covestro Polymers (China) Co., Ltd.
Propylene glycol methyl ether acetate (PMA): Solvent, available from Shanghai Macklin Biochemical Co., Ltd.
Commercially available solventborne chloroprene: toluene as the solvent, and a mixture of chloroprene rubber and terpene phenolic resin as the resin, with solid content of 34.5% by weight.
Commercially available solventborne polyurethane 1: butanone as the solvent, and hydroxyl polyester-based polyurethane as the resin, with solid content of 14.5% by weight.
Commercially available solventborne polyurethane 2: a mixture of butanone and ethyl acetate as the solvent, and hydroxyl polyester-based polyurethane as the resin, with solid content of 14.5% by weight.

Table 1 shows the composition of the coating compositions of Examples 1-7 and Comparative Examples 1-11 and the performance results of the coatings formed by the coating compositions. Table 2 shows the composition of the coating compositions of Examples 1, 8 and 9 and Comparative Examples 12-13 and the performance results of the coatings formed by the coating compositions. Table 3 shows the composition of the coating compositions of Examples 1, 10 and 11 and Comparative Examples 14-15 and the performance results of the coatings formed by the coating compositions. Table 4 shows the composition of the coating compositions of Examples 1, 12 and 15 and Comparative Example 16 and the performance results of the coatings formed by the coating compositions.

### Preparation of coating compositions

According to the components of the coating composition and contents thereof shown in Tables 1-4, the polyurethane prepolymer resin, the ammonium polyphosphate, the expanded graphite, the water scavenger and optionally other additives were mixed uniformly in a dual planet mixer. After stirring and dispersing for 30 minutes under vacuum and with an increased speed, the mixture was discharged to obtain the coating compositions of Examples 1-6, and 8-15 of the present invention and Comparative Examples 1-3, and 5-16. The coating compositions were filled and stored for use. The coating compositions of the Examples had a paste appearance and were homogeneous.

According to the components of Example 7 and contents thereof shown in Table 1, propylene glycol methyl ether acetate (PMA) was further added and stirred to obtain the coating composition of Example 7 of the present invention. The coating composition was filled and stored for use.

Comparative Example 4 was a two-component coating system. It was necessary to mix the commercially available solventborne polyurethane 2 and Desmodur RFE uniformly prior to use, and use the composition up within a few hours.

### Preparation of fire resistant coatings

### Fire resistant coatings of Examples 1-6 and 8-15 and Comparative Examples

The coating compositions or the two-component coating systems were blade-coated uniformly on the surface of a fire retardant polycarbonate (PC) sheet. The coating thickness on the surface of the sheet was controlled to be about 0.25mm. The fire resistant coatings were obtained by curing for 1 day at room temperature.

### Fire resistant coating of Example 7

The coating composition of Example 7 was gently stirred, and sprayed evenly with a dry film thickness of 0.1 mm on the surface of the fire retardant polycarbonate (PC) sheet using the Iwata spray gun W-71 with a nozzle size of 2 mm. The coated sheet was dried in an oven at 80°C for 10 minutes. After cooling, the second spraying was carried out with a dry film thickness of 0.15mm. After drying in an oven at 80°C for 10 minutes, the sheet was taken out and allowed to stand at room temperature for the curing of the coating composition to obtain a fire resistant coating with a coating thickness of 0.25mm.

### Performance evaluation

Storage stability: The obtained coating compositions or coating systems were sealed in a cartridge, placed in an oven at 50°C for 4 weeks, and then taken out. After cooling, it was checked whether the coating compositions or coating systems were cured. When it was not cured, the extrusion rate was tested according to the method of the present invention. The storage stability was considered as qualified when the extrusion rate was no less than 80 ml/min.

Extrusion rate: According to GB/T 13477.3-2017, the sealed coating compositions or coating systems were put into a pneumatic gun, which was connected with 200 KPa compressed air and kept stable. The nozzle opening of the pneumatic gun was of 1cm. The compositions should be pressed out 2-3cm before testing. During the test, the coating composition samples were extruded out at once by means of compressed air. The extrusion rate was calculated with an accuracy of 1 ml/min depending on the volume of the sample which was extruded out and the extrusion time. The samples with extrusion rate of no less than 80 ml/min were considered as qualified.

Sag resistance: According to GB/T 13477.6-2002, the sag mold for testing was washed with acetone and dried. A polyethylene strip was lined on the bottom of the mold to cover the upper edge of the mold and was fixed on the outside. The samples of the coating compositions or coating systems were filled into the mold with a spatula while avoiding the formation of bubbles, and compacted. The horizontal sag and vertical sag of the coating compositions or coating systems were tested respectively. As for the horizontal sag, the mold was placed horizontally in an oven at 50°C for 24 hours, and then taken out and cooled. The distance that the coating compositions or coating systems extended in the horizontal direction was measured with a steel ruler and recorded as the horizontal sag. As for vertical sag, the mold was hung vertically in an oven at a temperature of 50°C for 24 hours, and then take out and cooled. The distance that the coating compositions or coating systems extended downward was measured with a steel ruler and recorded as the vertical sag. It was considered as qualified, when the horizontal sag and the vertical sag were not more than 3mm.

Surface drying time: In accordance with method B of GB/T 13477.5-2002, the samples of the coating compositions or coating systems were placed in the standard state (23°C, 50% RH) for 10 minutes. Finger tips were wiped and cleaned with absolute ethanol. The test pieces were touched at three different points with the finger tips. It was repeated until no sample stuck to the finger tips. The time span from coating of the samples to occurrence of tack-free state of the samples was record as the surface drying time. It was considered as qualified, when the surface drying time was of <4h.

Adhesion: The fire-retardant coatings were tested after storage at room temperature for 7 days. A 10mm×10mm grid was made on the coatings by scratching with a knife, which was deep enough to reach the surface of the substrate. The coatings were checked whether they would fall off or be torn off. It was considered as qualified, when the coating adhered completely to the substrate and the substrate was not exposed. When the coatings formed by the coating compositions or coating systems were considered as unqualified in terms of the adhesion, it was no longer necessary to test the fire retardancy and whether the coating would fall off during combustion.

Fire retardancy: In accordance with the flammability standard of UL94, the prepared fire retardant coatings were tested after storage at room temperature for 7 days. The methane gas was used at a flow rate of 500W for continuous burning for 5 minutes, wherein the blue flame aimed at the bottom of the fire-retardant coatings. The coatings were considered as qualified in terms of the fire retardancy, when the substrate was not burnt through. The coatings were considered as unqualified in terms of the fire retardancy, when the substrate was burned through. It was also observed whether the coating would fall off during the combustion. It was even better when the coating didn't fall off.

Coatability: In Examples 1-6, 8-15 and Comparative Examples, a film with a thickness of 0.25 mm was stuck on both sides of the substrate. The coating compositions or coating systems were applied by blade coating. The coating composition of Example 7 was sprayed, wherein the thickness of the coating was controlled to be 0.25±0.01 mm. It was required that the coatings formed from the coating compositions or coating systems were continuous and not discrete during blade coating or spraying and it was not difficult to spread out the coating compositions or coating systems. When it was difficult to spread out the coating compositions or coating systems or they were discrete, it was considered as difficult to coat or spray. It was no longer necessary to test the adhesion and fire retardancy and whether the coating would fall off during combustion, when it was difficult to coat or spray the coating compositions or coating systems.

Damage of coatings to the substrate: 7 days after being coated, it was observed visually whether there was deformation, discoloration, cracks and lifting on the substrate. When one of the above phenomena occurred, it was considered that the coating compositions or coating systems caused damage to the substrate. When there was no such phenomenon, it was considered that the coating compositions or coating systems caused no damage to the substrate.

**Table 1 Composition of the coating compositions of Examples 1-7 and Comparative Examples 1-11 and performance of the coatings**

| Component | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 | Comp. Ex. 11 | Ex. 1 | Ex. 2 | Ex. 3 | Ex. 4 | Ex. 5 | Ex. 6 | Ex. 7 |
|---|---|---|---|---|---|---|---|---|---|---|---|---|---|---|---|---|---|---|
| Commercially available solventborne chloroprene | | 44.2 | - | - | - | - | - | - | - | - | - | - | - | - | - | - | - | - |
| Commercially available solventborne polyurethane 1 | - | - | 62.0 | | - | - | - | - | - | - | - | - | - | - | - | - | - | - |
| Commercially available solventborne polyurethane 2 | - | - | - | 62.0 | - | - | - | - | - | - | - | - | - | - | - | - | - | - |
| Propylene glycol methyl ether acetate | - | - | - | - | - | - | - | - | - | - | - | - | - | - | - | - | - | 30.0 |
| Desmodur E 22 | - | - | - | - | - | - | - | - | - | 19.7 | 39.4 | 39.4 | 39.4 | - | - | 35.5 | 263 | 27.6 |
| Desmodur SBU Isocyanate 0620 | - | - | - | - | - | - | - | - | - | - | - | - | - | 39.4 | - | - | - | - |
| Desmodur E 21 | - | - | - | - | 39.4 | - | - | - | - | - | - | - | - | - | - | - | - | - |
| Desmodur E 23 | - | - | - | - | - | 39.4 | - | - | - | - | - | - | - | - | - | - | - | - |
| Desmoseal M 280 | - | - | - | - | - | - | 39.4 | - | - | - | - | - | - | - | - | - | - | - |
| Desmodur E 14 | - | - | - | - | - | - | - | - | - | - | - | - | - | - | 39.4 | 3.9 | - | - |
| Desmodur E 30600 | - | - | - | - | - | - | - | 39.4 | - | 19.7 | - | - | - | - | - | - | 13.1 | - |
| Desmodur VP LS 2371 | - | - | - | - | - | - | - | - | 39.4 | - | - | - | - | - | - | - | - | - |
| Additive TI | - | - | - | - | 1.5 | 1.5 | 1.5 | 1.5 | 1.5 | 1.5 | 1.5 | 1.5 | - | 1.5 | 1.5 | 1.5 | 1.5 | 1.0 |
| Dynasylan VTMO | - | - | - | - | - | - | - | - | - | - | - | - | 1.5 | - | - | - | - | - |
| CAB-O-SIL LM150 | - | 0.3 | 0.8 | 0.8 | - | - | - | - | - | - | - | - | - | - | - | - | - | - |
| PUREGP-95 | - | 18.5 | 12.4 | 12.4 | 19.7 | 19.7 | 19.7 | 19.7 | 19.7 | 19.7 | | 19.7 | 19.7 | 19.7 | 19.7 | 19.7 | 19.7 | 13.8 |
| Pentaerythritol | - | - | - | - | - | - | - | - | - | - | 19.7 | - | - | - | - | - | - | - |
| EXOLIT AP 423 | - | 37.0 | 24.8 | 24.8 | 39.4 | 39.4 | 39.4 | 39.4 | 39.4 | 39.4 | 39.4 | 39.4 | 39.4 | 39.4 | 39.4 | 39.4 | 39.4 | 27.6 |
| Total /g | - | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| Solid content of the coating composition /wt% | - | 71 | 47 | 47 | 100 | 100 | 100 | 100 | 100 | 100 | 100 | 100 | 100 | 100 | 100 | 100 | 100 | 70 |
| Weight ratio 1 | - | 15 2:555 | 9:37.2 | 9372 | 2:3 | 2:3 | 2:3 | 2:3 | 2:3 | 2:3 | 2:3 | 2:3 | 2:3 | 2:3 | 2:3 | 2:3 | 2:3 | 2:3 |
| Weight ratio 2 | - | 1:2 | 1:2 | 1:2 | 1:2 | 1:2 | 1:2 | 1:2 | 1:2 | 1:2 | 0 | 1:2 | 1:2 | 1:2 | 1:2 | 1:2 | 1:2 | 1:2 |
| Desmodur RFE | - | - | - | 5.0 | - | - | - | - | - | - | - | - | - | - | - | - | - | - |
| Perform ance evaluation | | | | | | | | | | | | | | | | | | |
| Extrusion rate | / | qualified | qualified | qualified | qualified | qualified | qualified | qualified | qualified | qualified | qualified | qualified | qualified | qualified | qualified | qualified | qualified | * |
| Sag resistance | / | qualified | qualified | qualified | qualified | qualified | qualified | qualified | qualified | qualified | qualified | qualified | qualified | qualified | qualified | qualified | qualified | qualified |
| Surface drying time | / | <1h | <1h | <1h | <2h | <2h | <4h | <4h | <4h | <2h | <2h | <2h | <2h | <2h | <4h | <2h | <2h | <2h |
| Coatability /Sprayability | / | no | yes | yes | yes | yes | no | yes | yes | yes | yes | yes | yes | yes | yes | yes | yes | yes |
| Adhesion | / | / | qualified | qualified | unqualified | unqualified | / | qualified | qualified | qualified | qualified | qualified | qualified | qualified | qualified | qualified | qualified | qualified |
| Damage of the coating to PC | / | yes | yes | yes | no | no | no | no | no | no | no | no | no | no | no | no | no | no |
| Fire retardancy | unqualified | / | qualified | qualified | / | / | / | unqualified | unqualified | unqualified | qualified | qualified | qualified | qualified | qualified | qualified | qualified | qualified |
| Detachment of the coating | uncoated | / | no | no | / | / | / | no | no | no | no | no | no | no | no | no | no | no |
| Storage stability | / | qualified | qualified | qualified | qualified | qualified | qualified | qualified | qualified | qualified | unqualified | qualified | qualified | qualified | qualified | qualified | qualified | qualified |

| | | | | | | | | | | | | | | | | | | |
|---|---|---|---|---|---|---|---|---|---|---|---|---|---|---|---|---|---|---|
| Note: Weight ratio 1 refers to the ratio of weight of the polyurethane prepolymer to weight sum of the expanded graphite and the ammonium polyphosphate without surface treatment. Weight ratio 2 refers to the weight ratio of the expanded graphite to the ammonium polyphosphate without surface treatment. "/" means the coating compositions were not tested. "*": Example 7 was a solventborne coating composition, which was applied by spraying and not applicable for testing of extrusion rate. | | | | | | | | | | | | | | | | | | |

The coating compositions of Examples 1-7 had good extrusion rate, good sag resistance, fast surface drying time and good storage stability, and were easy to coat or spray without damage to the substrate. The coatings formed from the coating compositions had good adhesion, fire retardancy and didn't fall off once exposed to heat.

In Comparative Example 1, a commercially available fire retardant polycarbonate substrate was used, which had no coating on its surface. The substrate was burned through within less than 3 minutes during continuous combustion.

In Comparative Example 2, a commercially available one-component solventborne chloroprene resin was used. The coating composition was not easy to apply. The solvent therein corroded the substrate surface and caused cracks thereon and bending deformation. Thus the coating damaged the substrate.

In Comparative Example 3, a commercially available one-component solventborne polyurethane resin was used. The solvent in the coating composition corroded the substrate surface and caused cracks thereon and bending deformation. Thus the coating damaged the substrate.

In Comparative Example 4, a commercially available two-component solventborne polyurethane resin system was used. The solvent in the system corroded the substrate surface and caused cracks thereon and bending deformation. Thus the coating system damaged the substrate.

The polyurethane prepolymer of Comparative Examples 5-6 had isocyanate group content of above 14%. The adhesion of the coatings formed from the coating compositions to the substrate was unqualified. The polyurethane prepolymer of Comparative Example 7 had isocyanate group content of less than 2.5% by weight, and the coating composition was difficult to apply continuously on the substrate surface.

The coating compositions of Comparative Examples 8-9 comprised only an aliphatic isocyanate-based polyurethane prepolymer. The substrates with the coatings formed from the comparative coating compositions were burned through and showed unqualified fire retardancy.

The polyurethane prepolymer of the coating composition of Comparative Example 10 comprised 50% by weight of an aromatic isocyanate-based polyurethane prepolymer and 50% by weight of an aliphatic isocyanate-based polyurethane prepolymer. The substrate with the coating formed from the comparative coating composition was burnt through and showed unqualified fire retardancy.

The coating composition of Comparative Example 11 comprised a polyurethane prepolymer, pentaerythritol, an ammonium polyphosphate and a water scavenger, and showed unqualified storage stability. The storage stability of Example 1 comprising expandable graphite, a polyurethane prepolymer, an ammonium polyphosphate and a water scavenger was significantly better than that of Comparative Example 11.

**Table 2 Composition of coating compositions of Examples 1 and 8-9 and Comparative Examples 12-13 and performance of the coatings**

| Component | Comp. Ex. 12 | Comp. Ex. 13 | Ex. 1 | Ex. 8 | Ex. 9 |
|---|---|---|---|---|---|
| Desmodur E 22 | 39.4 | 39.4 | 39.4 | 39.4 | 39.4 |
| Additive TI | 1.5 | 1.5 | 1.5 | 1.5 | 1.5 |
| PUREGP-95 | 19.7 | 19.7 | 19.7 | 19.7 | 19.7 |
| EXOLIT AP 435 | 39.4 | - | - | - | - |
| EXOLIT AP 462 | - | 39.4 | - | - | - |
| EXOLIT AP 423 | - | - | 39.4 | - | - |
| EXOLIT AP 422 | - | - | - | 39.4 | - |
| EXOLIT AP 428 | - | - | - | - | 39.4 |
| Total /g | 100.0 | 100.0 | 100.0 | 100.0 | 100.0 |
| Solid content of the coating composition /% | 100 | 100 | 100 | 100 | 100 |
| Weight ratio 1 | 2:3 | 2:3 | 2:3 | 2:3 | 2:3 |
| Weight ratio 2 | 1:2 | 1:2 | 1:2 | 1:2 | 1:2 |

| Performance evaluation | | | | | |
|---|---|---|---|---|---|
| Extrusion rate | qualified | qualified | qualified | qualified | qualified |
| Sag resistance | qualified | qualified | qualified | qualified | qualified |
| Surface drying time | <1h | <1h | <2h | <2h | <2h |
| Coatability | yes | yes | yes | yes | yes |
| Adhesion | qualified | qualified | qualified | qualified | qualified |
| Damage of the coating to PC | no | no | no | no | no |
| Fire retardancy | qualified | qualified | qualified | qualified | qualified |
| Detachment of the coating | no | no | no | no | no |
| Storage stability | unqualified | unqualified | qualified | qualified | qualified |

| | | | | | |
|---|---|---|---|---|---|
| Note: Weight ratio 1 refers to the ratio of weight of the polyurethane prepolymer to weight sum of the expanded graphite and the ammonium polyphosphate. Weight ratio 2 refers to the weight ratio of the expanded graphite to the ammonium polyphosphate. | | | | | |

In comparative examples 12-13, an ammonium polyphosphate with physically surface treatment or chemically surface treatment was used. In Examples 1 and 8-9, an ammonium polyphosphate without surface treatment was used. The storage stability of the coating compositions of Comparative Examples 12-13 was unqualified. The performance of the coating compositions of Examples 1 and 8-9 were significantly better than that of Comparative Examples 12-13.

**Table 3 Composition of coating compositions of Examples 1 and 10-11 and Comparative Examples 14-15 and performance of the coatings**

| Component | Comp. Ex. 14 | Comp. Ex. 15 | Ex. 1 | Ex. 10 | Ex. 11 |
|---|---|---|---|---|---|
| Desmodur E 22 | 29.5 | 69.0 | 39.4 | 34.5 | 59.1 |
| Additive TI | 1.5 | 1.5 | 1.5 | 1.5 | 1.5 |
| PUREGP-95 | 23.0 | 9.8 | 19.7 | 21.3 | 13.1 |
| EXOLIT AP 423 | 46.0 | 19.7 | 39.4 | 42.7 | 26.3 |
| Total /g | 100.0 | 100.0 | 100.0 | 100.0 | 100.0 |
| Solid content of the coating composition /% | 100 | 100 | 100 | 100 | 100 |
| Weight ratio 1 | 3:7 | 7:3 | 2:3 | 7:13 | 3:2 |
| Weight ratio 2 | 1:2 | 1:2 | 1:2 | 1:2 | 1:2 |

| Performance evaluation | | | | | |
|---|---|---|---|---|---|
| Extrusion rate | qualified | qualified | qualified | qualified | qualified |
| Sag resistance | qualified | qualified | qualified | qualified | qualified |
| Surface drying time | <1h | <2h | <2h | <1h | <2h |
| Coatability | no | yes | yes | yes | yes |
| Adhesion | / | qualified | qualified | qualified | qualified |
| Damage of the coating to PC | / | no | no | no | no |
| Fire retardancy | / | unqualified | qualified | qualified | qualified |
| Detachment of the coating | / | no | no | no | no |
| Storage stability | qualified | qualified | qualified | qualified | qualified |

| | | | | | |
|---|---|---|---|---|---|
| Note: Weight ratio 1 refers to the ratio of weight of the polyurethane prepolymer to weight sum of the expanded graphite and the ammonium polyphosphate. Weight ratio 2 refers to the weight ratio of the expanded graphite to the ammonium polyphosphate. "/" means the coating compositions were not tested. | | | | | |

The ratio of weight of the polyurethane prepolymer to weight sum of the expanded graphite and the ammonium polyphosphate in Comparative Example 14 was 3:7. It was difficult to apply the coating composition uniformly and continuously. The ratio of weight of the polyurethane prepolymer to weight sum of the expanded graphite and the ammonium polyphosphate in Comparative Example 15 was 7:3. The fire retardancy of the coating composition was poor. All performance of the coating compositions of examples 1, and 10-11 met the requirements.

**Table 4 Composition of coating compositions of Examples 1, and 12-15 and Comparative Example 16 and performance of the coatings**

| Component | Comp. Ex. 16 | Ex. 12 | Ex. 13 | Ex. 14 | Ex. 1 | Ex. 15 |
|---|---|---|---|---|---|---|
| Desmodur E 22 | 39.4 | 39.4 | 39.4 | 39.4 | 39.4 | 39.4 |
| Additive TI | 1.5 | 1.5 | 1.5 | 1.5 | 1.5 | 1.5 |
| PUREGP-95 | 3.3 | 39.4 | 29.55 | 23.6 | 19.7 | 7.4 |
| EXOLIT AP 428 | 55.8 | 19.7 | 29.55 | 35.5 | 39.4 | 51.7 |
| Total /g | 100.0 | 100.0 | 100.0 | 100.0 | 100.0 | 100.0 |
| Solid content of the coating composition /% | 100 | 100 | 100 | 100 | 100 | 100 |
| Weight ratio 1 | 2:3 | 2:3 | 2:3 | 2:3 | 2:3 | 2:3 |
| Weight ratio 2 | 33:558 | 2:1 | 1:1 | 236:355 | 1:2 | 74:517 |

| Performance evaluation | | | | | | |
|---|---|---|---|---|---|---|
| Extrusion rate | qualified | qualified | qualified | qualified | qualified | qualified |
| Sag resistance | qualified | qualified | qualified | qualified | qualified | qualified |
| Surface drying time | <2h | <2h | <2h | <2h | <2h | <2h |
| Coatability | no | yes | yes | yes | yes | yes |
| Adhesion | / | qualified | qualified | qualified | qualified | qualified |
| Damage of the coating to PC | / | no | no | no | no | no |
| Fire retardancy | / | qualified | qualified | qualified | qualified | qualified |
| Detachment of the coating | / | yes | yes | yes | no | no |
| Storage stability | qualified | qualified | qualified | qualified | qualified | qualified |

| | | | | | | |
|---|---|---|---|---|---|---|
| Note: Weight ratio 1 refers to the ratio of weight of the polyurethane prepolymer to weight sum of the expanded graphite and the ammonium polyphosphate. Weight ratio 2 refers to the weight ratio of the expanded graphite to the ammonium polyphosphate. "/" means the coating compositions were not tested. | | | | | | |

The weight ratio of the expanded graphite to the ammonium polyphosphate of the coating composition in Comparative Example 16 was 33:558. The coating composition could not be applied uniformly and continuously. The weight ratio of the expanded graphite to the ammonium polyphosphate of the coating compositions in Examples 1 and 12-15 was between 1:10 and 4:1. The coating performance of the coating compositions was significantly better than that in Comparative Example 16. Moreover, it can be seen from Examples 1 and 15 that the coating formed from the coating composition didn't fall off once exposed to heat, when the weight ratio of the expanded graphite to the ammonium polyphosphate of the coating composition was between1:7 and 1:2.

Those skilled in the art will readily understand that the present invention is not limited to the foregoing details, and can be implemented in other specific forms without departing from the spirit or main characteristics of the present invention. Therefore, the examples should be regarded as illustrative rather than restrictive from any point of view, so that the scope of the present invention is illustrated by the claims rather than the foregoing description. Therefore, any change shall be regarded as belonging to the present invention, as long as it falls into the meaning and scope of equivalents of the claims.

## Claims

1. A coating composition, comprising:
a. a polyurethane prepolymer, which comprises 60% by weight to 100% by weight of an aromatic isocyanate-based polyurethane prepolymer and 0% by weight to 40% by weight of an aliphatic and/or cycloaliphatic isocyanate-based polyurethane prepolymer, relative to the total weight of the polyurethane prepolymer;
b. expanded graphite;
c. ammonium polyphosphate without surface treatment;
d. water scavenger; and
e. optionally a solvent in an amount of not more than 35% by weight, relative to the total weight of the composition;
wherein the isocyanate group content of the polyurethane prepolymer of component a) is of 2.5% by weight to 14% by weight, relative to the total weight of the solid constituents of the polyurethane prepolymer of component a); the amount of the water scavenger of component d) is of 0.1% by weight to 5% by weight, relative to the total weight of the composition; and the ratio of weight of the polyurethane prepolymer of component a) to weight sum of the expanded graphite of component b) and the ammonium polyphosphate without surface treatment of component c) is of 1:2-2:1, and the weight ratio of the expanded graphite of component b) to the ammonium polyphosphate without surface treatment of component c) is of 1:10-4:1.

2. The composition according to claim 1, wherein the ratio of weight of the polyurethane prepolymer of component a) to weight sum of the expanded graphite of component b) and the ammonium polyphosphate without surface treatment of component c) is of 7:13-3:2.

3. The composition according to claim 1 or 2, wherein the aromatic isocyanate-based polyurethane prepolymer is one or more of diphenylmethane diisocyanate-based polyurethane prepolymers and toluene diisocyanate-based polyurethane prepolymers.

4. The composition according to any one of claims 1 to 3, wherein the aliphatic and/or cycloaliphatic isocyanate-based polyurethane prepolymer is one or more of isophorone diisocyanate-based polyurethane prepolymers and hexamethylene diisocyanate-based polyurethane prepolymers.

5. The composition according to any one of claims 1 to 4, wherein the expanded graphite has at least one of the following characteristics:
i. the particle size of 10-100 mesh, which is measured according to GB 10698-89; and
ii. the expanded rate of preferably 200ml/g-400ml/g, which is measured according to GB 10698-89.

6. The composition according to any one of claims 1 to 5, wherein the expanded graphite is flake graphite.

7. The composition according to any one of claims 1 to 6, wherein the ammonium polyphosphate without surface treatment has at least one of the following characteristics:
A. the phosphorus content of not less than 25% by weight, relative to the total weight of the ammonium polyphosphate;
B. the particle size of 1µm-100 µm, which is measured according to the laser diffraction method;
C. the decomposition temperature of not less than 275°C, which is measured according to GB/T 13464-92; and
D. the polymerization degree of greater than 1000, which is measured by nuclear magnetic resonance method.

8. The composition according to any one of claims 1 to 7, wherein the weight ratio of the expanded graphite to the ammonium polyphosphate without surface treatment is of 1:7-2:1, and most preferably 1:7-1:2.

9. The composition according to any one of claims 1 to 8, wherein the water scavenger is one or more of vinyl trimethoxysilane, phenyl isocyanate and triethyl orthosilicate.

10. The composition according to any one of claims 1 to 9, wherein the solvent is one without active hydrogen, most preferably an ether ester having a boiling point of 100°C to 180°C.

11. Use of the coating composition according to any one of claims 1 to 10 for slowing down or preventing the spread of fire or heat generated by an object.

12. A coating method comprising applying the coating composition according to any one of claims 1 to 10 to the surface of an object and/or a storage pack of the object, and then curing.

13. An article comprising an object and a coating formed by applying the coating composition according to any one of claims 1 to 10 to the object and/or the storage pack of the object and then curing.

14. The article according to claim 13, wherein the object is selected from flammable objects, more preferably batteries, train chassises, automotive chassises, doors and windows, and most preferably electric vehicle batteries.

15. The article according to claim 13, wherein the storage pack of the object is selected from storage packs for flammable objects, more preferably battery packs, still more preferably electric vehicle battery packs, and most preferably one or more of the top cover of the electric vehicle battery pack, the bottom cover of the electric vehicle battery pack, and joints of various parts of the electric vehicle battery pack.
